# EUROPEAN PATENT SPECIFICATION

(11) **EP 0 170 098 B1**
(45) Date of publication and mention of the grant of the patent: **15.12.1993**
(21) Application number: 85108307.1
(22) Date of filing: 04.07.1985
(51) Int. Cl.: G01N 1/10

(54) **Dialysis cell**
Dialysierzelle
Cellule de dialyse

(30) Priority: 05.07.1984 US 627894; 02.07.1985 US 750670
(43) Date of publication of application: 05.02.1986
(73) Proprietor: NICHOLS INSTITUTE DIAGNOSTICS, San Juan Capistrano, CA 92690-6130 (US)
(72) Inventor: Nelson, Jerald C., Corona del Mar California 92625 (US)
(74) Representative: VOSSIUS & PARTNER

(56) References cited:
- CH-A- 291 180
- FR-A- 2 085 387
- GB-A- 1 595 079
- US-A- 3 830 106
- US-A- 4 077 875

## Description

This invention relates to dialysis cells. More particularly, the invention relates to a disposable cell that is economical to manufacture and easy to use.

There has been an effort over the last 10 years to develop for clinical and clinical research laboratories some method of estimating free hormone concentrations other than by measuring them indirectly. Equilibrium dialysis is regarded as the best method of separating protein-bound ligand from free ligand, and is used particularly in the thyroid field where iodinated tracers are used. However, it is considered to be a cumbersome procedure, difficult to do, and entirely outside the purview of routine clinical chemistry.

Two factors have contributed to this. One is that there is a mystique about how to measure the dialyzable fraction of thyroxine, which involves equilibrium dialysis of serum to which a tracer amount of radio-iodine labelled thyroxine has been added. That mystique is, in part, due to a less than fully understood de-iodination of thyroxine that occurs immediately after its preparation. If a laboratory were to buy radio-iodine labelled thyroxine from a company that sells radio nuclides, by the time the shipment got to the laboratory, the product would be contaminated with radio-iodides and some radio-iodine labelled thyroxines. There are methods available for repurifying that material in the laboratory just before its use; however, during the incubation (which is necessary to achieve equilibrium), further de-iodination occurs, so that the dialysate radioactivity is always made up of at least two molecular species: radio-iodide, which may have been generated during the dialysis incubation, and the radio-iodine labelled thyroxine. The relationship of the one molecular species to the other varies depending on the clinical state of the patient from whom the serum is taken.

With respect to the dialysis itself, published studies indicate that it is important to hold the chemical composition of the serum during dialysis at a physiologic constant. In an effort to get around this iodide contamination problem, and because iodide is not found in serum proteins, almost all dialysis chemistries previously devised for the measurement of free hormones, including thyroxine, employ simple buffers that radically distort the ionic environment of the serum proteins and dilute the serum proteins. As a result, one cannot obtain an accurate measurement of, for example, the dialyzable free thyroxine fraction using undiluted serum samples, unless a large dialysate volume is used to dilute out the iodide.

Standard methods for the measurement of free thyroxine in serum involve dialysis to separate the free form from the protein-bound form. The partitioning of thyroxine between the free and bound forms is estimated by the addition of radioiodine-labeled thyroxine to the serum sample prior to dialysis. The dialysis is carried out by using a diluted serum sample and/or a great excess of dialysate volume to assist in controlling pH (which has a profound effect on T₄ binding to serum proteins) and to help in minimizing the effect of contaminating iodide which poses a major methodologic difficulty. Direct radioimmunoassays of T₄ in serum dialysates in an effort to avoid the tracer T₄ induced artifact resulting from spontaneous deiodination and radioiodide contamination of tracer T₄ have been described previously.

It has now been discovered that the rate of tracer T₄ deiodination during the equilibrium dialysis incubation is different for different sera and that radioiodide contamination of tracer T₄ is different in the dialysates of different sera. It has also been discovered that the effect of diluting serum proteins is different on sera from different clinical disorders.

It is clear that it would be desirable to measure free T₄ concentrations by a method which distorts the endogenous environment as little as possible. Such a method would employ a direct measurement of free T₄ by radioimmunoassay and avoid the addition of radio-iodine-labeled T₄ tracers. Furthermore, it would dilute the serum sample as little as possible, employ a buffer which is as much like an ultrafiltrate of serum as is possible and carry out the dialysis procedure not only at physiologic temperatures but also in an environment of gases which mimic the physiologic in vivo situation.

The dialysis cell of this invention is designed to accomplish this by allowing the dialysis of a small volume of buffer against a large volume of serum sample in an atmosphere containing physiologic concentrations of blood gases. At the completion of dialysis the dialysate sample for radioimmunoassay quantification can be volumetrically pipetted from the dialysis cell into the RIA tube and the dialysis cell can be discarded.

The following references contain disclosure with respect to dialysis cells: Helenius, T. and Liewendahl, K., "Improved Dialysis Method for Free Thyroxin in Serum Compared with Five Commercial Radio-immunoassays in Nonthyroidal Illness and Subjects with Abnormal Concentrations of Thyroxin-Binding Globulin," Clinical Chemistry, Vol. 29, No. 5, (1983), pages 816-922; Lee, N.D. and Pileggi, V.J., "Measurement of 'Free' Thyroxine in Serum," Clinical Chemistry, Vol. 17, No. 3, (1971), pages 166- 173; and Elkins, R.P. and Ellis, S.M., "The Radioimmunoassay of Free Thyroid Hormones in Serum" (Excerpta Medica, 7th International Thyroid Conference, Abstract #158 (1976)), pages 597-600; Weake, J., & Orskov, J.,_{,} Recent Advances in Clinical Biochemistry (Churchill-Livingston: Edinburgh, New York (1978)), pages 111-128; U.S. Patent No. 4,077,875 to Kremer issued March 7, 1978.

The dialysis cell described by Helenius et al. has an upper compartment and a lower compartment rather than inner and outer compartments. In assembling that cell any air included in the lower compartment would rise to the membrane and interfere with diffusion of dialyzable substances. The Helenius et al. cell must be assembled with a rubber ring to attach the dialysis membrane to the upper compartment and an aluminum clamping device with two screws to hold the upper and lower compartments tightly together. This cell is not disposable and must be washed and ringed thoroughly before reuse.

The Ekins et al. cell also consists of an upper compartment and a lower compartment, which raises the problem of trapped air beneath the dialysis membrane that would impede dialysis. In the Ekins et al. cell, the lower compartment is filled with dialysate; then a membrane is stretched across the lower compartment and pressed into the lower compartment by an intermediate unit which contains the serum sample. This in turn is capped by a screw-capped top that closes the entire chamber. This cell is not opened to the environmental air for gas exchange, it is more difficult to assemble, and it is not made of disposable material.

The Lee et al. cell is currently widely used for equilibrium dialysis. It consists of two acrylic plastic halves each of which contains a cut out cavity of matching size as well as holes through which bolts can be placed to attach each half to the other. A dialysis membrane is placed between the halves, the bolts and nuts are tightened (a step which is critical since leaking will cause errors) and the sample is introduced through a narrow port on one side and the buffer through a similar port on the other side. This chamber is expensive and not disposable. It requires considerable effort to wash and prepare the chamber prior to utilization and between assay runs. Furthermore, the ports are too small to allow equilibration with ambient gases or sampling with common quantitative hand-held pipettors.

The dialysis cell illustrated by Weeke et al. consists of dialysis tubing supported in a test tube with a stopper on top of the tube supporting the tubing and closing its two ends. This creates an inner and outer compartment but leaves both blocked from the ambient atmosphere and makes sampling of the inner compartment difficult. Furthermore, the handicraft required to handle wet dialysis tubing, introduce a sample or buffer into the tubing without loss and close both ends after suspending the tubing in the test tube and surrounding it with the test tube contents is a matter of considerable skill.

The US-A-4,077,875, taken as the starting point for claim 1, discloses an ultra-filtration apparatus wherein an outer and an inner sleeve, a membrane and a displacement body are arranged in a container. The membrane is sandwiched on its open end between a slightly tapered female fitting of the outer sleeve and a male fitting of the inner sleeve. The displacement body extends into a membrane bag such providing a good fluid contact with most of the membrane surface also in case of a low fluid volume. The apparatus comprises no special means for sealing the membrane.

The Kramer cell is designed to spread the inner compartment contents in a thin layer against the dialysis membrane by filling most of this compartment with solid material (displacement body). The equipment is non-disposable, and complex to assemble, disassemble, wash and prepare for reuse.

### SUMMARY OF THE INVENTION

It is the object of the invention to provide a dialysis cell which is producible, simple and inexpensive and effectively prevents the transfer of a fluid except through the dialysis membrane.

According to the invention a dialysis cell is provided having the features set out in claim 1. Further embodiments of the invention are defined in dependent claims 2 to 5, where as claim 6 defines the use of a dialysis cell of the invention in combination with a buffer composition for dialysis of serum.

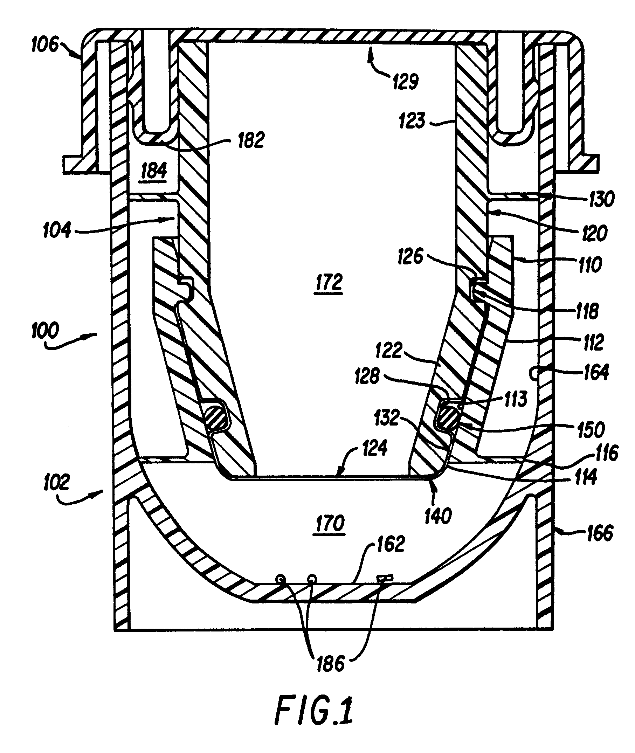

The dialysis cell of the present invention is described in detail below with reference to figure 1, which shows a cross-sectional view of the dialysis cell of this invention.

As shown, the cell 100 comprises a disposable vial 102 and a membrane cylinder, generally designated 104. A removable cap 106 is snap fitted over the membrane cylinder 104 and over the vial 102.

The membrane cylinder 104 includes an outer cylinder 110 having a conical side wall portion 112 which tapers to an open end portion 114. A first seal member 116 extends laterally outwardly from the outer surface of cylinder 110. A protuberance 118 extends inwardly from the inner wall surface of cylinder 110; the purpose and function of protuberance 118 will be described in more detail below. The membrane cylinder 104 further comprises an inner cylinder 120 having a conical wall portion 122, which tapers to an open end 124, and a straight wall portion 123 extending from the widest portion of the conical wall section 122. The outer wall surface of inner cylinder 120 has circumferential grooves 126 and 128 formed therein. A second seal member 130 extends laterally outwardly from the outer surface of cylinder 120. The straight sided wall section 123 terminates in an open end portion 129.

The seals 116 and 130 are preferably of a type marketed by V-Tech, Inc. of Los Angeles, California, under the name "Click-Stick." The opening 124 in cylinder 120 is sealed by a semi-permeable dialysis membrane 140. The membrane 140 is preferably made of a polycellulose material of known type. The membrane 140 is stretched over the open end 124 and is pressed over the outer surface of at least part of the conical wall portion 122. The membrane extends far enough up the side of conical wall 122 so that it may be pressed into recess 128. A compressible O-ring sealing member 150 is fitted into groove 128 over the membrane 140. Typically, dialysis membranes are relatively stiff and it is difficult to form a fluid tight seal with them. One purpose of the compressible O-ring 150 is to mold itself to the very small ridges and channels formed in the membrane when the membrane is pressed into the groove 128. By forming itself to these micro-channels and ridges, the O-ring can effectively compress the membrane against the wall surfaces of channel 128 to provide a fluid tight seal.

The cylinders 110 and 120 are press-fit over one another around the membrane 140 to form a "cone seal" between them. To ensure that the cylinders remain securely locked together, the protuberance 118 seats in groove 126 to provide a snap-fit lock which holds the cylinders 110 and 120 in place against each other. Press-fitting the cylinders 110 and 120 against each other also acts to further compress O-ring 150. The inner wall surface 113 of cylinder 110 presses against the O-ring 150 to squeeze it into the channel 128, enhancing the compressive forces of the O-ring acting on the portion of the membrane 140 in channel 128.

The vial 102 completes the basic construction of the dialysis cell. The vial and the cylinders 110, 120 are preferably made of chemically compatible, inert plastic materials, that are preferably transparent. The vial 102 is open at the top and, in the embodiment shown, has a bottom 162 which, with wall 164, define a chamber into which the locked cylinders 110, 120 may be inserted. A downwardly extending section 166 of wall 164 acts as a base for the cell.

With the membrane cylinder 104 in place in vial 102, the seals 116 and 130 seat against the inner surface of the vial wall 164. Seal 130 acts primarily as a stabilizing member for the membrane cylinder, especially when cap 106 has been removed as discussed in more detail below. The seal 116, together with vial bottom wall 162 and membrane 140 define a first (outer) compartment 170. A second (inner) compartment 172 is defined inside the membrane cylinder 104 by the inner surface of cylinder walls 122 and the membrane 140. The compartment 172 may either be open to the ambient atmosphere, or, as shown in FIG. 1, may be covered with cap 106. Cap 106, as shown, has a rib 182 which seats in a space 184 between the walls of vial 102 and membrane cylinder 104. Rib 182 is dimensioned to fit tightly against cylinder wall section 123 and securely (but not necessarily tightly) against vial wall 164.

Prior to use, the dialysis cell is assembled by first prewashing the membrane 140 add then assembling the membrane cylinder 104 as described above. The vial 102 is then partially filled with a predetermined amount of dialysis buffer. The membrane cylinder 104 is inserted in the vial, so that seal 116 acts to confine the dialysis buffer to the compartment 170. The entire unit can then be capped with cap 106 and shipped pre-assembled and ready for use.

To begin dialysis, the user can pipette a serum sample into compartment 172 through an X-slit port in cap 106. To end dialysis, the user would normally remove the cap with the attached membrane cylinder from the vial 102.

As noted above, the cap 106 press fits over the open end 129 of membrane cylinder 104. The construction of the dialysis cell is such that when the cap is removed, e.g., upon completion of dialysis, the membrane cylinder remains attached to the cap for removal from vial 102. Subsequently, the cap can be removed from the membrane cylinder and replaced on the vial to allow for dialysate sample storage and transmittal. The top of the cap 106 advantageously contains a self-closing X-slit port to allow fluid, e.g. serum, to be added to or removed from compartment 172 with a standard pipettor without removing the cap. The standard closed-top cap may be replaced with a snap cap having an open port top. The open port allows a controlled rate of evaporation of the serum in the upper compartment during dialysis incubation. To maintain equilibrium between evaporative water loss and osmotic water gain, the size of the port must be matched to the duration and temperature of the dialysis incubation. This permits dialysis of the serum sample in the compartment 172 without dilution.

In one example, the open port in the cap had a diameter of 1.0 cm. The overall height of compartment 172 was 35 mm. Dialysis was carried out on a serum sample of 0.6 ml at room temperature for 18-20 hours. It was found the dialysate contained a negligible amount of osmetically active proteins.

Still a further feature of this invention, as shown in FIG. 1, is the use of magnetic stirrer beads 186 in compartment 170. The stirrer beads can be incorporated into the cell 100 during the assembly process. During dialysis, the cell may be mounted on a magnetic stirring assembly or mechanical shaking assembly to cause the beads to stir the fluid in compartment 170. In preliminary tests using glucose, stirring reduced the time to reach diffusion equilibrium from 16 hours to 2 hours.

One of the advantages of the assembly of FIG. 1 is that the membrane 140 can be prewashed prior to assembly and then transported and stored wet. It is known that dialysis membranes require washing before use. However, their polycellulosic structure will crack and leak if they are dried. Thus, they must be transported and stored wet. The present invention, by allowing the cell to be preassembled with the dialysis buffer in place, permits the membrane to be stored wet and thus prevent cracking and leakage that would otherwise occur.

A further feature is that the O-ring 150 is "hidden" in sequestered channel 128 to prevent contact between the O-ring material and the serum sample. It has been found that certain O-ring materials will disturb protein binding equilibrium in sera. The present design prevents this disturbance, which can adversely alter the results and thus a diagnosis based on the dialysis results.

The dialysis cell described above is easy to use and is readily disposable after use. The unique system of seals holds the dialysis membrane in place and prevents leakage between the compartments. The magnitude of osmotic water gain is controlled by controlling the membrane surface area. Additionally, equilibrium can be established between evaporative water loss from compartment 172 and osmotic water gain through membrane 140.

Features of the invention that should be considered by the manufacturer and/or the user include the dialysis membrane pore size, dialysis membrane surface area/inner compartment volume (to optimize diffusion equilibrium), the use of materials which do not release substances that would "poison" the analytic methods employed nor adsorb free ligands and convenient access through the top with hand-held pipettors.

Currently known and used dialysis cells or chambers are all made of relatively costly materials. They all require assembling prior to use, disassembling after use and the insertion of a new clean piece of membrane, reassembly and then reuse. This is extremely labor-intensive, and is a principal reason why ordinary clinical laboratories are unwilling to perform such dialysis. They are not willing to go through the handicraft necessary to do the dialysis and they are not willing to concern themselves with the vagaries of tracer degradation and dialysis chemistry. The existing dialysis cells in addition, while they allow access to either the serum compartment or the buffer compartment during the course of dialysis and at the completion of dialysis, do not have large enough ports so that one can get gas equilibration from the ambient environment with the serum and the dialysate. This means that one cannot use the body's mechanism of controlling pH with a bicarbonate buffer, i.e., carbon dioxide pressure in the atmosphere.

The present invention has several advantages over known dialysis cells. First, a disposable dialysis cell is provided. The parts are easy to manufacture and assemble.

Second, one end of the dialysis chamber may be left open to the atmosphere with a sufficiently large opening so that, for the first time, a CO₂ environment can be used to achieve physiologic pH's employing a dialysate buffer that has the same ionic composition as serum water. Alternatively, a nonphysiologic buffer which allows for the escape of serum CO₂ can be used. If the assay is performed in room air, using a nonphysiologic buffer, one must employ a buffer which will turn all of the endogenous bicarbonate into carbonic acid, and one then has to allow for the carbonic acid to escape into the environment in order to get the pH back to 7.4. Undiluted serum cannot be used unless there is an opportunity for gas equilibration with the environment, either for the dissolved CO₂ formed by bicarbonate acid neutralization in the non-physiologic state or by atmospheric CO₂ entering the serum in the physiologic state. When serum is taken out of the body, the dissolved CO₂ escapes into the air; the serum that sits out on the laboratory shelf has a pH of 8,5 to 9, which results in a radical pH alteration of the binding of hormones to serum proteins. Such pH's are unacceptable for equilibrium dialysis for the measurement of free hormones. In the past, this problem was overcome by diluting the serum portion, on the order of about 1 to 10 to 1 to 150 with a buffer solution and then dialyzing it against an approximately equivalent volume to a volume as much as 20 moles greater in dialysate. With such dilutions of serum, the gas exchange issue becomes effectively moot. The present invention avoids the need for diluting the serum altogether.

Another feature of the present invention resides in the ability to utilize it effectively with serum sample in either the inner or outer chamber and the buffer solution or dialysate in the other chamber. Known dialysis cells in use limit their function to placing the serum sample in the inner chamber (equivalent to the dialysis sac of this invention) and placing the buffer solution or dialysate in the outer chamber (comparable to the vial).

When a patient has ingested a drug that inhibits binding of hormones to proteins, the serum sample can be diluted. The dilution of the serum sample reduces the concentration of the inhibitor, which in turn changes the kinetics of the molecules, e.g., T₄, binding to serum proteins. Any dialysis naturally involves some transport of water from the buffer side into the serum side because of oncotic, osmotic pressure of the serum proteins. One way to minimize water transport is to make the serum volume large and the dialysate volume small in a practical way. A way to avoid the water transport problem, which is resolved by the cell of FIG. 1, is to provide for equilibration between water evaporation from the serum sample and water osmosis through the membrane from the buffer to the serum sample.

Another advantage to the present invention is that it allows the dialyzed buffer solution to be removed from the dialysis cell without disturbing the serum. A direct radioimmunoassay analysis can then be performed on the dialyzed buffer. Since no tracer is added to the system during dialysis, tracer deterioration is thereby avoided.

This invention can be used in many equilibrium dialysis situations for the measurement of free or unbound hormones, drugs, neuro-peptides, electrolytes, any biologically active molecule which is bound to proteins in biologic fluids or, generally, any molecular separation where it is desired to separate dialyzable molecules (e.g., salts) from non-dialyzable ones (e.g., macromolecules, such as proteins).

Among substances that can be detected using the cell of the invention are thyroxine, triiodothyronine, testosterone, cortisol, estradiol, certain anti-convulsants such as carbamazapine, valproic acid or phenyltoin, or benzodiazepines such as Valium, Librium, and the like. Of particular interest is the determination of biological substances which are bound to substance-binding proteins.

Buffers are utilized that will maintain the pH at between 7.0 and 7.8, most preferably between 7.2 and 7.6. The buffers should generally comprise salts present at normal serum ion concentration, organic acid buffers, especially organic sulfonic acid buffers, antibiotics capable of inhibiting the growth of gram-positive cocci, gram negative bacteria, and fungi. A neutral carrier not capable of binding the biological substance being determined, such as, for example, a non-T₄ binding immunoglobulin, most preferably rabbit IgG, should also be present to prevent adsorption losses. A high molecular weight substance capable of binding to glass or generally to the dialysis cell walls, but incapable of binding to the biological substance being determined, such as, for example, gelatin, should be added so as to prevent nonspecific adsorption of the biological substance being determined to the walls of the dialysis cell. Additional substances such as urea, hydroxy acids or amino acids, e.g., lactic acid or glutamic acid, can also be added to the buffer composition so as to more accurately mirror physiological serum profiles.

Among organic buffers that can be utilized are:
ACES (N-2-acetamido-2-aminoethane sulfonic acid);
ADA (N-2-acetamidoaminodiacetic acid);
Bicine (N,N-bis(2-hydroxyethyl(glycine)));
Bis-tris-propane (1,3-bis[tris(hydroxymethyl) methylamino]propane);
Diethylmalonic acid;
Glycineamide (glycinamide);
Glycylglycine;
HEPES (N-2-hydroxyethylpiperazine-N¹-2-ethanesulfonic acid);
HEPPS (N-2-hydroxyethylpiperazine-N¹-3-propanesulfonic acid);
Imidiazole;
MOPS (3-(N-morpholino)propanesulfonic acid);
PIPES (piperazine(N-N¹-bis-2-ethanesulfonic acid));
TES (2-[tris-(hydroxymethyl)methyl]aminoethane-sulfonic acid);
Tetramethylammonium hydroxide;
Tricine (N-[tris(hydroxymethyl)methyl]glycine);
Triethanolamine;
TRIS (Tris(hydroxymethyl)aminomethane).

A preferred buffer will comprise potassium, calcium, magnesium and sodium ions in normal physiological concentrations of serum) chloride, phosphate and sulfate anions in normal physiological concentrations of serum; one of the aforementioned organic buffering compounds at concentrations sufficient to maintain substantial buffering capacity under the conditions desired at a range from 7.0 to 7.8, most preferably 7.2 to 7.6; an appropriate mixture of antibiotics as described previously in concentrations sufficient to substantially prevent or inhibit the growth of undesirable microorganisms; gelatin at a concentration sufficient to cover the dialysis cell wall and capable of preventing the adsorption of the biological substance being measured; and an additional neutral protein carrier such as rabbit IgG at a concentration sufficient to prevent substantial adsorption losses of the substance being determined to walls or membranes.

Specific features of the dialysis cell/buffer system for measurement of serum free thyroxine (T₄) are as follows:

### 1. Compartment volumes:

- The T₄ RIA uses a 500 ul sample. The lower compartment is designed to hold 2.4 ml of dialysate, thus allowing for RIA in duplicate with sufficient remaining dialysate to repeat the RIA on problem samples plus allowances for pipetting losses and osmotic losses. The upper (serum) compartment has been designed to hold 0.6 ml of serum (see pH control below).

### 2. pH Control:

- T₄ binding is pH dependent. The pH must be controlled in the range between 7.2 and 7.6. HEPES buffer has been chosen for pH control because its pKa at 37^{o}C is 7.4. HEPES anion will displace T₄ from binding proteins if the concentration is greater than about 60 mM. To control the pH of sera with acidosis and alkalosis, an effective HEPES concentration of 240 mM is needed. To achieve this total buffering capacity without exceeding the 60 mM anion concentration, a buffer volume 4 times the serum volume was designed. The HEPES buffer can then be distributed in a volume 5 times greater than the serum volume alone (serum = 1; buffer = 4), thereby reducing the serum concentration of HEPES anion to 48 mM and avoiding HEPES anion interference with T₄ equilibria, while maintaining the required overall buffering capacity.

### 3. Membrane surface area:

- It was determined experimentally that the use of a 1 cm² circle of dialysis membrane provides the optimal surface area matching of diffusion equilibrium time with protein-binding equilibrium time to T₄ (16 hours) when the upper compartment contains 0.6 ml of serum and the lower compartment contains 2.4 ml of dialysate, and no stirring is used.

### 4. Dialysate protein concentrations:

- To eliminate adsorbtion losses the dialysate buffer must contain protein. Gelatin and gammaglobulin do not bind T₄. They do interfere with the radioimmunoassay at high concentrations. In order to eliminate T₄ adsorbtion while maintaining gelatin and gammaglobulin concentrations below the level for interference, it was determined that neither protein alone was adequate. As a consequence, the dialysis buffer contains subthreshold concentration of both proteins in a formulation which eliminates T₄ adsorbtion to plastics and membranes.

### 5. Dialysate chemistry:

- In addition to the HEPES buffer, gelatin and gammaglobulins, the remaining constituents of the dialysate buffer include the non-protein constituents in serum with concentrations of 1 mM or more to provide a virtually physiologic environment for the dialysis reaction.

### 6. Antibiotics:

- To eliminate the possibility of bacterial growth during the dialysis incubation, a mixture of penicillin, gentamycin, streptomycin and amphotericin B is used. The concentration of each constituent is below the threshold concentration needed to alter T₄ binding equilibrium.
   An optimized buffer for T₄ measurement is:
   NaCl : 5265 mg/l;
   DL-lactic acid : 1008 mg/l;
   L-glutamic acid : 561 mg/l;
   KCl : 224 mg/l;
   KH₂PO₄ : 180 mg/l;
   CaCl₂.2H₂O : 275 mg/l;
   MgSO₄.7H₂O : 246 mg/l;
   Urea : 300 mg/l;
   Gelatin : 500 mg/l;
   Rabbit IgG : 200 mg/l;
   HEPES sodium salt : 5891 mg/l;
   HEPES acid : 6046 mg/l;
   Penicillin : 100000 U/l;
   Streptomycin : 100 mg/l;
   Amphotericin : 250 ug/l; and
   Gentamycin : 100 mg/l.

The buffer is prepared in deionized water prior to use.

## Claims

1. A dialysis cell with a vial (102 )and a membrane cylinder (104) as an insert, wherein the membrane cylinder (104) comprises an outer cylinder (110) having a conically shaped wall portion (112) which tapers to an open end portion (114); an inner cylinder (120) having a conically shaped portion (122) complementary to said conically shaped portion (112) of said outer cylinder (110) which tapers to an open end (124) and a straight wall portion (123) extending from the widest portion of the conically shaped portion (122) to an open end portion (129); and a dialysis membrane (140), disposed over said outer surface of at least a part of said conically shaped portion (122) of the inner cylinder (120) and extending over the open end (124) and sandwiched between the outer and inner surfaces of the conically shaped portions of the inner and the outer cylinder (120 and 110, respectively); wherein said dialysis membrane (140) and said inner cylinder (120) define an inner fluid compartment (172); characterized in that,
a) said dialysis membrane (140) is stretched over said open end (124) and is pressed into a circumferential groove (128) provided in the outer surface of the conically shaped portion (122) of the inner cylinder (120) by means of a compressible sealing member being an O-ring (150) fitted into said groove (128) over said membrane (140),
b) a snap-fit lock comprising a circumferential groove (126) in said inner cylinder (120) and a protuberance (118) extending from the wall surface of said outer cylinder (110) and engaging said groove (126) is provided for securing said inner (120) and said outer cylinder (110) to each other, and
c) a first seal member (116) extends laterally outwardly from the outer surface of said outer cylinder (110) against the vial wall (164) and a second seal member (130) extends laterally outwardly from the outer wall surface of said inner cylinder (120) against the vial wall (164), and wherein said membrane (140), said seal member (116) and the vial bottom wall (162) define an outer fluid compartment (170) between them.

2. A dialysis cell according to claim 1 wherein a cap (106) covers said vial (102) and said membrane cylinder (104), wherein said cap (106) comprises a rib (182) engaging into a space (184) between the walls of said vial (102) and said membrane cylinder (104) such that when said cap (106) is removed said membrane cylinder (104) remains attached to said cap (106 )for removal from said vial (102).

3. A dialysis cell according to claim 2, wherein the top of said cap (106) comprises a self-closing X-slit port to allow fluid to be added to or removed from the compartment (172) inside the inner cylinder (120) and said membrane (140).

4. A dialysis cell according to claim 2, wherein the top of said cap (106) comprises an open port.

5. A dialysis cell according to anyone of claims 1 to 4 comprising magnetic stirrer beads (186) in said outer fluid compartment (170).

6. Use of the dialysis cell according to anyone of claims 1 to 5 in combination with a buffer composition for dialysis of serum, wherein said inner compartment (172) contains the buffer composition and said outer compartment (170) contains the serum being in contact with said buffer composition via said dialysis membrane (140).

## Patentansprüche

1. Dialysezelle mit einer Ampulle (102) und einem Membranzylinder (104) als Einsatzstück, wobei der Membranzylinder (104) einen äußeren Zylinder (110) mit einem konisch geformten Wandabschnitt (112), der sich zu einem offenen Endabschnitt (114) verjüngt; einen inneren Zylinder (120) mit einem konisch geformten Abschnitt (122), der zu dem konisch geformten Abschnitt (112) des äußeren Zylinders (110) komplementär ist und sich zu einem offenen Ende (124) verjüngt, und einen geraden Wandabschnitt (123) aufweist, der sich vom weitesten Abschnitt des konisch geformten Abschnitts (122) zu einem offenen Endabschnitt (129) erstreckt; sowie einer Dialysemembran (140), die über der Außenfläche wenigstens eines Teils des konisch geformten Abschnitts (122) des inneren Zylinders (120) angeordnet ist und sich über das offene Ende (124) erstreckt und zwischen der Außen- bzw. Innenfläche der konisch geformten Abschnitte des inneren bzw. äußeren Zylinders (120 bzw. 110) eingeklemmt ist, wobei die Dialysemebran (140) und der innere Zylinder (120) eine innere Fluidkammer (172) bilden; dadurch gekennzeichnet, daß
a) die Dialysemembran (140) über das offene Ende (124) gespannt und durch ein kompressibles, als O-Ring ausgebildetes Dichtungsglied (150), das über der Membran (140) in eine periphere Nut (128) eingesetzt wird, die in der Außenfläche des konisch geformten Abschnitts (122) des inneren Zylinders (120) vorgesehen ist, in die Nut (128) gepreßt wird,
b) daß eine Schnappsitzarretierung mit einer peripheren Nut (126) in dem inneren Zylinder (120) und einem Vorsprung (118), der sich von der Wandoberfläche des äußeren Zylinders (110) erstreckt und mit der Nut (126) im Eingriff ist, zur Befestigung des inneren (120) und des äußeren Zylinders (110) aneinander vorgesehen ist, und
c) daß ein erstes Dichtungsglied (116) sich von der Außenfläche des äußeren Zylinders (110) seitlich nach außen gegen die Ampullenwand (164) erstreckt und ein zweites Dichtungsglied (130) sich von der äußeren Wandfläche des inneren Zylinders (120) seitlich nach außen gegen die Ampullenwand (164) erstreckt, wobei zwischen der Membran (140), dem Dichtungsglied (116) und der Bodenwand (162) der Ampulle eine äußere Fluidkammer (170) abgegrenzt ist.

2. Dialysezelle nach Anspruch 1, wobei die Ampulle (102) und der Membranzylinder (104) durch eine Kappe (106) abgedeckt sind, wobei die Kappe (106) eine Rippe (182) aufweist, die in einen Raum (184) zwischen den Wänden der Ampulle (102) und des Membranzylinders (104) eingreift, so daß beim Abnehmen der Kappe (106) der Membranzylinder (104) an der Kappe (106) befestigt bleibt und aus der Ampulle (102) entfernt wird.

3. Dialysezelle nach Anspruch 2, wobei der Deckel der Kappe (106) eine selbstschließende X-Schlitzöffnung aufweist, um die Zugabe oder Entnahme von Fluid in die bzw. aus der Kammer (172) innerhalb des inneren Zylinders (120) und der Membran (140) zu ermöglichen.

4. Dialysezelle nach Anspruch 2, wobei der Deckel der Kappe (106) eine offene Öffnung aufweist.

5. Dialysezelle nach einem der Ansprüche 1 bis 4, die magnetische Rührperlen (186) in der äußeren Fluidkammer (170) aufweist.

6. Anwendung der Dialysezelle nach irgendeinem der Ansprüche 1 bis 5 in Kombination mit einer Puffermischung für die Dialyse von Serum, wobei die innere Kammer (172) die Puffermischung und die äußere Kammer (170) das Serum enthält, das sich über die Dialysemembran (140) in Kontakt mit der Puffermischung befindet.

## Revendications

1. Une cellule de dialyse avec un récipient (102) et un cylindre à membrane (104) comme pièce rapportée, où le cylindre à membrane (104) comprend un cylindre extérieur (110) ayant une portion de paroi en forme de cône (112) qui décroît vers une portion d'extrémité ouverte (114) ; un cylindre intérieur (120) ayant une portion en forme de cône (122) complémentaire de ladite portion en forme de cône (112) dudit cylindre extérieur (110) qui décroît vers une extrémité ouverte (124) et une portion de paroi droite (123) s'étendant de la portion la plus large de la portion en forme de cône (122) vers une portion d'extrémité ouverte (129) ; et une membrane de dialyse (140) disposée sur ladite surface extérieure d'au moins une partie de ladite portion en forme de cône (122) du cylindre intérieur (120) et s'étendant sur l'extrémité ouverte (124) et intercalée entre les surfaces extérieure et intérieure des portions en forme de cône des cylindres intérieur et extérieur (respectivement 120 et 110) ; où ladite membrane de dialyse (140) et ledit cylindre intérieur (120) délimitent un compartiment de fluide intérieur (172) ; caractérisée en ce que,
a) ladite membrane de dialyse (140) est tendue sur ladite extrémité ouverte (124) et est pressée dans une rainure circonférentielle (128) ménagée dans la surface extérieure de la portion en forme de cône (122) du cylindre intérieur (120) par un élément d'étanchéité compressible qui est un joint torique (150) adapté dans ladite rainure (128) sur ladite membrane (140),
b) un encliquetage comprenant une rainure circonférentielle (126) dans ledit cylindre intérieur (120) et une saillie (118) s'étendant de la surface de paroi dudit cylindre extérieur (110) et s'encliquetant dans ladite rainure (126) est disposé pour assujettir entre eux ledit cylindre intérieur (120) et ledit cylindre extérieur (110), et
c) un premier élément d'étanchéité (116) s'étend latéralement vers l'extérieur à partir de la surface extérieure dudit cylindre extérieur (110) contre la paroi du récipient (164) et un second élément d'étanchéité (130) s'étend latéralement vers l'extérieur à partir de la surface de paroi extérieure dudit cylindre intérieur (120) contre la paroi du récipient (164) et où ladite membrane (140), ledit élément d'étanchéité (116) et la paroi de fond du récipient (162) délimitent entre eux un compartiment de fluide extérieur (170).

2. Une cellule de dialyse selon la revendication 1, dans laquelle un bouchon (106) couvre ledit récipient (102) et ledit cylindre à membrane (104), où ledit bouchon (106) comprend une nervure (182) se logeant dans un espace (184) entre les parois dudit récipient (102) et dudit cylindre à membrane (104), de telle sorte que, lorsque ledit bouchon (106) est retiré, ledit cylindre à membrane (104) demeure fixé audit bouchon (106) pour être retiré dudit récipient (102).

3. Une cellule de dialyse selon la revendication 2, dans laquelle le sommet dudit bouchon (106) comprend un orifice à fente en X à fermeture automatique pour permettre qu'un fluide soit ajouté au compartiment (172) à l'intérieur du cylindre intérieur (120) et de ladite membrane (140) ou en soit retiré.

4. Une cellule de dialyse selon la revendication 2, dans laquelle le sommet dudit bouchon (106) comprend un orifice ouvert.

5. Une cellule de dialyse selon l'une quelconque des revendications 1 à 4 comprenant des perles d'agitation magnétique (186) dans ledit compartiment de fluide extérieur (170).

6. Utilisation de la cellule de dialyse selon l'une quelconque des revendications 1 à 5 en combinaison avec une composition tampon pour la dialyse du sérum, dans laquelle ledit compartiment intérieur (172) contient la composition tampon, et ledit compartiment extérieur (170) contient le sérum qui est en contact avec ladite composition tampon via ladite membrane de dialyse (140).
